# EUROPEAN PATENT APPLICATION

(11) **EP 3 927 007 A1**
(43) Date of publication of application: **22.12.2021**
(21) Application number: 20756158.0
(22) Date of filing: 11.02.2020
(51) Int. Cl.: H04W 24/10

(54) **INFORMATION PROCESSING METHOD AND APPARATUS**

(30) Priority: 15.02.2019 CN 201910117701
(71) Applicant: Huawei Technologies Co., Ltd., Shenzhen, Guangdong 518129 (CN)
(72) Inventor: WANG, Rui, Shenzhen, Guangdong 518129 (CN); SHI, Xiaoli, Shenzhen, Guangdong 518129 (CN); DAI, Mingzeng, Shenzhen, Guangdong 518129 (CN); ZENG, Qinghai, Shenzhen, Guangdong 518129 (CN)
(74) Representative: Thun, Clemens
(86) International application number: PCT/CN2020/074723
(87) International publication number: WO 2020/164472

(57) **Abstract**

Embodiments of this application provide an information processing method and an apparatus. When a terminal device accesses or camps on a first cell served by a second network device, the terminal device records and stores first information of the terminal device in the first cell, where the first information may include connection failure report information of a radio link failure (RLF) or a handover failure, and/or measurement information obtained by performing measurement by using a minimization of drive tests (MDT) technology. After accessing a second cell, the terminal device may send, through the second cell, the first information to a first network device to which the second cell belongs, and a RAT corresponding to the second cell is different from a RAT corresponding to the first cell. According to the information processing method and the apparatus provided in the embodiments of this application, the first information recorded by the terminal device may be reported to the first network device to which the second cell belongs, so that cross-RAT reporting of information recorded by the terminal device is implemented.

## Description

This application claims priority to Chinese Patent Application No. 201910117701.6, filed with the China National Intellectual Property Administration on February 15, 2019 and entitled "INFORMATION PROCESSING METHOD AND APPARATUS", which is incorporated herein by reference in its entirety.

### TECHNICAL FIELD

This application relates to the field of communication technologies, and in particular, to an information processing method and an apparatus.

### BACKGROUND

Wireless networks are faced with a plurality of challenges, for example, a massive quantity of network elements, different systems, and a plurality of vendors, and consequently complexity and costs of network operation and maintenance are correspondingly increased. To meet these challenges, a concept of a self-organizing network (self-organizing network, SON) is proposed, and the SON has a plurality of characteristics such as self-configuration, self-optimization, and self-diagnosis.

In the self-organizing network, when a terminal device accesses or camps on a first cell in a long term evolution (long term evolution, LTE) network, the terminal device records and stores related information of the terminal device in the first cell. For example, the related information may include failure information indicating that a radio link failure (radio link failure, RLF) or a handover failure occurs, and/or measurement information obtained by performing measurement by using a minimization of drive tests (minimization of drive tests, MDT) technology. In addition, the related information in the first cell recorded by the terminal device may be reported by using a radio access technology (radio access technology, RAT) of the first cell to a base station to which the first cell belongs, or when the terminal device moves to a second cell (where a RAT of the second cell is the same as the RAT of the first cell), the terminal device reports, to a base station to which the second cell belongs, the related information in the first cell recorded by the terminal device.

Therefore, how to implement cross-RAT reporting of information recorded by a terminal device is a technical problem to be urgently resolved by a person skilled in the art.

### SUMMARY

This application provides an information processing method and an apparatus, so that a terminal device in an access mode implements cross-RAT reporting of information recorded by the terminal device.

According to a first aspect, an embodiment of this application provides an information processing method. The information processing method may be performed by a terminal device or a module (for example, a chip) that may be used in the terminal device. An example in which the terminal device is an execution body is used for description. The information processing method may include: The terminal device records first information of a terminal device in a first cell, where the first information may include connection failure report information of a radio link failure (RLF) or a handover failure, and/or measurement information obtained by performing measurement by using a minimization of drive tests (MDT) technology, and a radio access technology (RAT) of the first cell is a first RAT. The terminal device sends the first information to a first network device through a second cell, where a RAT of the second cell is a second RAT, the second RAT is different from the first RAT, and the first network device is a network device to which the second cell belongs. The first information recorded by the terminal device may be reported to the first network device to which the second cell belongs, so that cross-RAT reporting of information recorded by the terminal device is implemented.

In a possible implementation, if a type of a core network that the terminal device accesses in the second cell is the same as a core network type recorded in the first information, the terminal device sends the first information to the first network device through the second cell. The terminal device may actively determine whether to send the first information to the first network device through the second cell, so that flexibility of reporting the first information is improved.

In a possible implementation, the terminal device receives first indication information from the first network device, where the first indication information indicates a network type, the network type may include an air interface type and/or a core network type, and the air interface type is the first RAT or the second RAT. The terminal device sends the first information to the first network device through the second cell based on the first indication information. In other words, whether the terminal device reports the first information is controlled by the first network device. In this way, the first network device may determine, based on an actual requirement of the first network device, whether the terminal device needs to report the first information. This satisfies the requirement of the first network device.

In a possible implementation, the terminal device sends third indication information to the first network device, where the third indication information indicates a network type recorded in the first information.

In a possible implementation, the terminal device receives second indication information from the first network device, where the second indication information indicates that the first network device has a capability of receiving the first information recorded in a format corresponding to the network type.

In a possible implementation, the terminal device records the first information of the terminal device in the first cell in a format corresponding to the first RAT.

In a possible implementation, the terminal device sends, to the first network device, identification information of the first cell and/or identification information of a second network device to which the first cell belongs, so that when the first information includes the connection failure report information, the first network device may determine the second network device based on the carried identification information of the first cell and/or identification information of the second network device to which the first cell belongs, and further successfully forward the connection failure report information to the second network device.

In a possible implementation, the first information may further include a random access channel (RACH) report and/or movement history information that is of the terminal device.

According to a second aspect, an embodiment of this application further provides an information processing method. The information processing method may be performed by a network device or a module (for example, a chip) that may be used in the network device. An example in which a first network device is an execution body is used for description. The information processing method may include: The first network device receives first information from a terminal device through a second cell, where the first information records connection failure report information of a radio link failure (RLF) or a handover failure of the terminal device in a first cell, and/or measurement information obtained by performing measurement by using a minimization of drive tests (MDT) technology, a radio access technology (RAT) of the first cell is a first RAT, a RAT of the second cell is a second RAT, and the second RAT is different from the first RAT. The first network device processes the first information.

In a possible implementation, before the first network device receives the first information from the terminal device through the second cell, the first network device further sends first indication information to the terminal device, where the first indication information indicates a network type, the network type may include an air interface type and/or a core network type, and the air interface type is the first RAT or the second RAT.

In a possible implementation, before the first network device sends the first indication information to the terminal device, the first network device may further receive third indication information from the terminal device, where the third indication information is used to indicate a network type recorded in the first information.

In a possible implementation, before the first network device receives the third indication information from the terminal device, the first network device may further send second indication information to the terminal device, where the second indication information is used to indicate that the first network device has a capability of receiving the first information recorded in a format corresponding to the network type.

In a possible implementation, the first network device receives, from the terminal device, identification information of the first cell and/or identification information of a second network device to which the first cell belongs.

In a possible implementation, when the first information includes the connection failure report information, the first network device determines, based on the connection failure report information, a cause of a connection failure of the terminal device, where the cause of the connection failure may include any one of premature handover of the terminal device, delayed handover of the terminal device, or handover of the terminal device to an incorrect cell.

In a possible implementation, when the first information includes the connection failure report information, the first network device sends the connection failure report information to the second network device, where the second network device is a network device to which the first cell belongs; and the first network device receives a cause of a connection failure from the second network device, where the cause of the connection failure is determined based on the connection failure report information.

In a possible implementation, the first information may further include a random access channel (RACH) report and/or movement history information that is of the terminal device.

According to a third aspect, an embodiment of this application further provides an information processing apparatus. The information processing apparatus may include a processing module and a sending module. The processing module is configured to record first information of a terminal device in a first cell, where the first information may include connection failure report information of a radio link failure (RLF) or a handover failure, and/or measurement information obtained by performing measurement by using a minimization of drive tests (MDT) technology, and a radio access technology (RAT) of the first cell is a first RAT. The sending module is configured to send the first information to a first network device through a second cell, where a RAT of the second cell is a second RAT, the second RAT is different from the first RAT, and the first network device is a network device to which the second cell belongs.

In a possible implementation, the sending module is specifically configured to: if a type of a core network that the terminal device accesses in the second cell is the same as a core network type recorded in the first information, send the first information to the first network device through the second cell.

In a possible implementation, the information processing apparatus may further include a receiving module. The receiving module is configured to receive first indication information from the first network device, where the first indication information indicates a network type, the network type may include an air interface type and/or a core network type, and the air interface type is the first RAT or the second RAT. The sending module is specifically configured to send the first information to the first network device through the second cell based on the first indication information.

In a possible implementation, the sending module is further configured to send third indication information to the first network device, where the third indication information indicates a network type recorded in the first information.

In a possible implementation, the receiving module is further configured to receive second indication information from the first network device, where the second indication information indicates that the first network device has a capability of receiving the first information recorded in a format corresponding to the network type.

In a possible implementation, the processing module is specifically configured to record the first information of the terminal device in the first cell in a format corresponding to the first RAT.

In a possible implementation, the sending module is further configured to send, to the first network device, identification information of the first cell and/or identification information of a second network device to which the first cell belongs.

In a possible implementation, the first information may further include a random access channel (RACH) report and/or movement history information that is of the terminal device.

According to a fourth aspect, an embodiment of this application further provides an information processing apparatus. The information processing apparatus may include a receiving module and a processing module. The receiving module is configured to receive first information from a terminal device through a second cell, where the first information records connection failure report information of a radio link failure (RLF) or a handover failure of the terminal device in a first cell, and/or measurement information obtained by performing measurement by using a minimization of drive tests (MDT) technology, a radio access technology (RAT) of the first cell is a first RAT, a RAT of the second cell is a second RAT, and the second RAT is different from the first RAT. The processing module is configured to process the first information.

In a possible implementation, the information processing apparatus may further include a sending module. The sending module is configured to send first indication information to the terminal device, where the first indication information indicates a network type, the network type may include an air interface type and/or a core network type, and the air interface type is the first RAT or the second RAT.

In a possible implementation, the receiving module is further configured to receive third indication information from the terminal device, where the third indication information is used to indicate a network type recorded in the first information.

In a possible implementation, the sending module is further configured to send second indication information to the terminal device, where the second indication information is used to indicate that the first network device has a capability of receiving the first information recorded in a format corresponding to the network type.

In a possible implementation, the receiving module is further configured to receive, from the terminal device, identification information of the first cell and/or identification information of a second network device to which the first cell belongs.

In a possible implementation, when the first information includes the connection failure report information, the processing module is further configured to determine, based on the connection failure report information, a cause of a connection failure of the terminal device, where the cause of the connection failure may include any one of premature handover of the terminal device, delayed handover of the terminal device, or handover of the terminal device to an incorrect cell.

In a possible implementation, when the first information includes the connection failure report information, the sending module is further configured to send the connection failure report information to the second network device, where the second network device is a network device to which the first cell belongs; and
the receiving module is further configured to receive a cause of a connection failure from the second network device, where the cause of the connection failure is determined based on the connection failure report information.

In a possible implementation, the first information may further include a random access channel (RACH) report and/or movement history information that is of the terminal device.

According to a fifth aspect, an embodiment of this application further provides an information processing apparatus, including a processor and a memory, where the memory is configured to store program instructions, and the processor is configured to: read the program instructions in the memory, and perform, according to the program instructions in the memory, the information processing method according to any one of the first aspect or the possible implementations of the first aspect or the information processing method according to any one of the second aspect or the possible implementations of the second aspect.

According to a sixth aspect, an embodiment of this application further provides a communication apparatus, including a module, a component, or a circuit configured to implement the method in any one of the first aspect or the possible implementations of the first aspect.

In a possible implementation, the communication apparatus is a terminal device.

In a possible implementation, the communication apparatus is a component (for example, a chip, a module, or a circuit) that may be used in the terminal device.

According to a seventh aspect, an embodiment of this application further provides a communication apparatus, including a module, a component, or a circuit configured to implement the method in any one of the second aspect or the possible implementations of the second aspect.

In a possible implementation, the communication apparatus is a terminal device.

In a possible implementation, the communication apparatus is a component (for example, a chip, a module, or a circuit) that may be used in the terminal device.

According to an eighth aspect, an embodiment of this application further provides a readable storage medium. The readable storage medium stores a computer program. When the computer program is executed, the computer program is configured to perform the method in any one of the first aspect or the possible implementations of the first aspect, or is configured to perform the method in any one of the second aspect or the possible implementations of the second aspect.

According to a ninth aspect, an embodiment of this application further provides a communication system. The communication system may include a terminal device and a network device. The terminal device is configured to perform the method in any one of the first aspect or the possible implementations of the first aspect, and the network device is configured to perform the method in any one of the second aspect or the possible implementations of the second aspect.

According to a tenth aspect, an embodiment of this application provides a program product. The program product includes a computer program. The computer program is stored in a readable storage medium. At least one processor of a communication apparatus may read the computer program from the readable storage medium. The at least one processor executes the computer program, so that the communication apparatus performs the method in any one of the first aspect or the possible implementations of the first aspect, or performs the method in any one of the second aspect or the possible implementations of the second aspect.

Embodiments of this application provide an information processing method and an apparatus. When the terminal device accesses or camps on the first cell served by the second network device, the terminal device records and stores the first information of the terminal device in the first cell. The first information may include the connection failure report information of the radio link failure (RLF) or the handover failure, and/or the measurement information obtained by performing measurement by using the minimization of drive tests (MDT) technology. After accessing the second cell, the terminal device may send, through the second cell, the first information to the first network device to which the second cell belongs, and the RAT corresponding to the second cell is different from the RAT corresponding to the first cell. According to the information processing method and the apparatus provided in the embodiments of this application, the first information recorded by the terminal device may be reported to the first network device to which the second cell belongs, so that the cross-RAT reporting of information recorded by the terminal device is implemented.

### BRIEF DESCRIPTION OF DRAWINGS

FIG. 1 is a schematic diagram of an application scenario according to an embodiment of this application;
FIG. 2 is a schematic diagram of an information processing method according to an embodiment of this application;
FIG. 3 is a schematic diagram of a method for determining to send first information to a first network device according to an embodiment of this application;
FIG. 4 is a schematic diagram of determining that premature handover of a terminal device occurs according to an embodiment of this application;
FIG. 5 is a schematic diagram of determining that delayed handover of a terminal device occurs according to an embodiment of this application;
FIG. 6 is a schematic diagram of determining that incorrect handover of a terminal device occurs according to an embodiment of this application;
FIG. 7 is a schematic diagram of a structure of a communication apparatus according to an embodiment of this application;
FIG. 8 is a schematic diagram of a structure of a terminal device according to an embodiment of this application;
FIG. 9 is a schematic diagram of a structure of an information processing apparatus according to an embodiment of this application; and
FIG. 10 is a schematic diagram of a structure of another information processing apparatus according to an embodiment of this application.

### DESCRIPTION OF EMBODIMENTS

Embodiments of this application may be used in an LTE system, or may be used in another communication system, for example, a 5th generation (5th generation, 5G) mobile communication system or another mobile communication system that may emerge in the future.

The following describes some terms in this application, to facilitate understanding of a person skilled in the art. It should be noted that when solutions in the embodiments of this application are used in 5G or the another mobile communication system that may emerge in the future, names of a network device and a terminal may change, but this does not affect implementation of the solutions in the embodiments of this application.

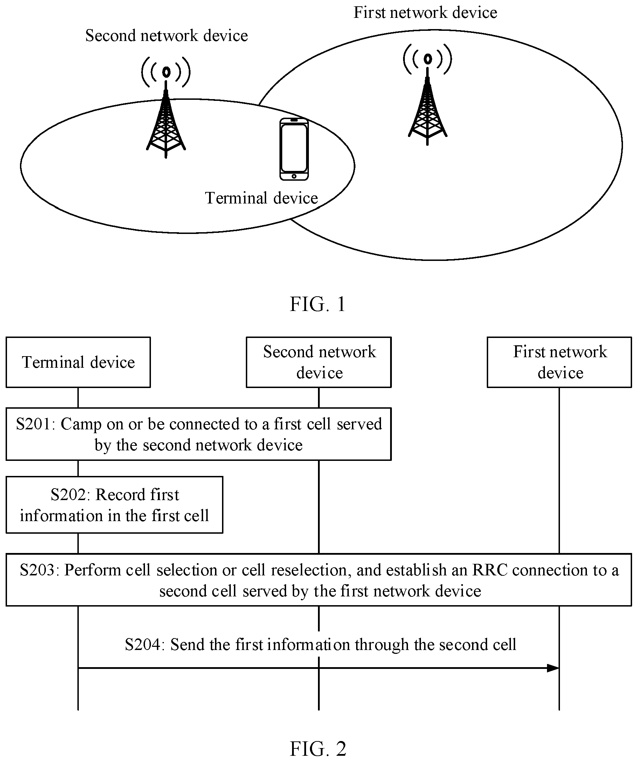

FIG. 1 is a schematic diagram of an application scenario according to an embodiment of this application. A communication system may include one terminal device and two network devices. The two network devices are respectively a first network device and a second network device. Types of core networks respectively connected to the first network device and the second network device may be the same, or may be different.

When the terminal device accesses or camps on a first cell served by the second network device, the terminal device records and stores first information of the terminal device in the first cell, where the first information includes connection failure report information of a radio link failure (RLF) or a handover failure, and/or measurement information obtained by performing measurement by using a minimization of drive tests (MDT) technology, and a RAT of the first cell is a first RAT. After accessing a second cell, the terminal device sends, through the second cell, the first information to the first network device to which the second cell belongs, where a RAT of the second cell is a second RAT, and the second RAT is different from the first RAT. In this way, the first information recorded by the terminal device is reported to the first network device to which the second cell belongs, and cross-RAT reporting of information recorded by the terminal device is implemented. It should be noted that in this embodiment of this application, that the first information includes connection failure report information of an RLF or a handover failure, and/or measurement information obtained by performing measurement by using an MDT technology may be understood as that the first information includes only the connection failure report information of the RLF or the handover failure, or may be understood as that the first information includes only the measurement information obtained by performing measurement by using the MDT technology. Certainly, it may alternatively be understood as that the first information includes the connection failure report information of the RLF or the handover failure, and the measurement information obtained by performing measurement by using the MDT technology. It should be noted that, that the terminal device accesses the second cell may be understood as that the terminal device attempts to access the second cell, for example, the terminal device performs random access in the second cell, or may be understood as that the terminal device has successfully accessed the second cell. Optionally, the first information may further include a random access channel (random access channel, RACH) report and/or movement history information that is of the terminal device. The RACH report includes related information of a failed random access process of the terminal device, for example, may include related information of a beam (beam) and related information of a synchronization signal and PBCH block (synchronization signal and PBCH block, SSB). The movement history information of the terminal device includes information about time of the terminal device in a cell that is recently accessed by the terminal device.

In the embodiments of this application, the terminal device is also referred to as a terminal or user equipment (user equipment, UE), and is a device that provides voice and/or data connectivity to a user, for example, a handheld device or a vehicle-mounted device that has a wireless connection function. Common terminal devices include, for example, a mobile phone, a tablet, a notebook computer, a palmtop computer, a mobile internet device (mobile internet device, MID), and a wearable device. The wearable device includes, for example, a smartwatch, a smart band, or a pedometer.

The network device provided in the embodiments of this application, also referred to as a radio access network (radio access network, RAN) device, is an access device through which the terminal device accesses the mobile communication system in a wireless manner, and may be a base station, an evolved NodeB (evolved NodeB, eNB), a transmission reception point (transmission reception point, TRP), a next generation NodeB (next generation NodeB, gNB) in a 5G mobile communication system, a base station in a future mobile communication system, an access node in a Wi-Fi system, or the like; or may be a module or a unit that completes a part of functions of a base station, for example, may be a central unit (central unit, CU), or may be a distributed unit (distributed unit, DU). A specific technology and a specific device form used by the radio access network device are not limited in the embodiments of this application.

Communication between the network device and the terminal device may be performed by using a licensed spectrum (licensed spectrum), or may be performed by using an unlicensed spectrum (unlicensed spectrum), or may be performed by using both a licensed spectrum and an unlicensed spectrum. Communication between the network device and the terminal device may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used between the network device and the terminal device is not limited in the embodiments of this application.

In the embodiments of this application, "at least one" means one or more, and "a plurality of' means two or more. The term "and/or" describes an association relationship between associated objects and indicates that three relationships may exist. For example, A and/or B may represent the following three cases: Only A exists, both A and B exist, and only B exists. A and B may be singular or plural. In the text descriptions of this application, the character "/" usually indicates an "or" relationship between associated objects.

To facilitate description of the technical solutions of the information processing method provided in this application, before the technical solutions provided in this application are described in detail, descriptions of a RAT type and a network type are first provided. In the embodiments of this application, the RAT type is an air interface type. For example, the air interface type may be new radio (new radio, NR) or evolved universal terrestrial radio access (evolved universal terrestrial radio access, E-UTRA). In conventional 2nd generation (2nd generation, 2G), 3rd generation (3rd generation, 3G), and 4th generation (4th generation, 4G) mobile communication systems, different air interfaces represent different communication systems. In a scenario in which 4G and 5G networks coexist, a cell of an air interface type may be connected to two types of core networks. For example, an E-UTRA cell may be connected to a 5th generation core (5th generation core, 5GC) or an evolved packet core (evolved packet core, EPC). That the terminal device is connected to the EPC through the E-UTRA cell may be understood as that the terminal device accesses the 4G network, and that the terminal device is connected to the 5GC through the E-UTRA cell may be understood as that the terminal device accesses the 5G network. In the 4G and 5G networks, air interface types are the same, but core network types are different. The 4G and 5G networks may also be understood as different communication systems. In the embodiments of this application, different communication systems are equivalent to different network types. The network type includes an air interface type or a core network type, or may include the air interface type and the core network type. When the network type includes the air interface type and the core network type, in a scenario in which network types are different, two cells correspond to different air interface types, but types of core networks accessed by the terminal device in the two cells are the same or different; and in another scenario in which network types are different, two cells correspond to a same air interface type, but types of core networks accessed by the terminal device in the two cells are different.

FIG. 2 is a schematic diagram of an information processing method according to an embodiment of this application. The information processing method may include the following steps.

S201: A terminal device camps on or is connected to a first cell. The first cell is a cell served by a second network device.

S202: The terminal device records first information of the terminal device in the first cell. The first information may include connection failure report information of an RLF or a handover failure, and/or measurement information obtained by performing measurement by using an MDT technology. Optionally, the first information may further include a RACH report and/or movement history information that is of the terminal device. It may be understood that the first information may further include other information. This is not limited in this embodiment of this application.

After the terminal device establishes a connection to the second network device to which the first cell belongs, if the RLF or the handover (handover, HO) failure of the terminal device occurs, the terminal device records the connection failure report information. In this embodiment of this application, the connection failure report information may include the RLF or the HO failure. Alternatively, if an access failure occurs when the terminal attempts to access the first cell, the terminal device records the connection failure report information. For example, a random access fails in the first cell when the terminal is handed over to the first cell. Alternatively, after cell selecting or reselecting to the first cell, connection establishment fails after the radio resource control (radio resource control, RRC) connection establishment is initiated, for example, the failure is caused by a random access failure.

It should be noted that the terminal device may be connected in the past to and already be disconnected from a plurality of cells, and have recorded information about the plurality of cells. For example, the terminal device may have recorded information about an E-UTRA cell, or may have recorded information about an NR cell. In this case, to more easily distinguish between RLFs or HO failures that occur in different air interface types, when recording and storing RLF or HO failure information, the terminal device may also record an air interface type corresponding to an RLF or an HO failure that occurs. In addition, when two cells correspond to a same air interface type, the terminal device may further record a type of a core network to which the terminal device is connected. For example, the core network type is EPC or 5GC.

S203: The terminal device performs cell selection or cell reselection, and establishes an RRC connection to a second cell.

That the terminal device performs cell selection may be understood as that the terminal device triggers RRC connection re-establishment after the RLF or the HO failure of the terminal device occurs. That the terminal device performs cell reselection may be understood as that the terminal device performs cell reselection in an idle mode or an inactive mode. That the terminal device establishes an RRC connection to a second cell may be understood as that the terminal device newly establishes the RRC connection to the second cell, or may be understood as that the terminal device re-establishes the RRC connection to the second cell, or certainly, may be understood as that the terminal device resumes the RRC connection to the second cell. A specific RRC mode between the terminal device and a network device may include a connected (connected) mode, an idle (idle) mode, and an inactive (inactive) mode. The terminal device in the connected mode may directly communicate with the network device to transmit data. The terminal device in the idle mode cannot directly transmit data to the network device, and can transmit data only after performing random access and establishing an RRC connection. The inactive mode may be considered as an intermediate mode between the connected mode and the idle mode. The terminal device and the core network retain a context of the user equipment (user equipment, UE) in the connected mode. Therefore, compared with the terminal device in the idle mode, the terminal device in the inactive mode can be switched to the connected mode more quickly. Currently, when the terminal device is switched from the RRC connected mode to the idle mode, an RRC configuration message is not retained. However, when the terminal device is switched from the connected mode to the inactive mode, a context of an RRC message is retained. In addition, the terminal device in the inactive mode cannot directly transmit data in the inactive mode, and can transmit data only after performing random access, establishing an RRC connection, and being switched to the RRC connected mode.

It should be noted that when establishing the RRC connection to the second cell, the terminal device may indicate, in an RRC connection establishment complete message, an RRC connection re-establishment complete message, or an RRC connection resume complete message, a network type recorded in the first information of the terminal device, or may indicate, in an RRC connection establishment complete message, an RRC connection re-establishment complete message, or an RRC connection resume complete message, the network type recorded in the first information of the terminal device. The network type includes an air interface type and/or a core network type. Specifically, the air interface type herein is an air interface type corresponding to the first cell, and the core network type is the type of the core network to which the terminal device is connected.

After establishing the RRC connection to the second cell in S203, the terminal device may send, through the second cell, the first information to a first network device to which the second cell belongs, that is, perform the following S204:
S204: The terminal device sends the first information to the first network device through the second cell.

For example, the first information may be carried in the RRC message. To be specific, the terminal device may send, through the second cell, the RRC message including the first information to the first network device. Certainly, the first information may alternatively be carried in another message. This is not limited in this embodiment of this application.

In a current technology, when a terminal device performs link failure recovery between cells of a same RAT, RRC connection re-establishment is triggered. In this case, the terminal device includes a cell identifier of a source cell in an RRC re-establishment request message, and a network device to which a current cell belongs may learn of information about a cell in which the terminal device is located when a link failure occurs. However, when the terminal device performs link failure recovery between different RATs, an RRC connection is newly established in a selected cell. During the new establishment of the RRC connection, the terminal device does not include information about a first cell or a second network device in which a failure occurs.

Optionally, when the RRC message including the first information is sent to the first network device, the RRC message may be encapsulated by using an air interface protocol format of a RAT corresponding to the second cell, and the connection failure report information after the encapsulation is sent to the first network device. A format of the first information may be an air interface protocol format of a RAT corresponding to the first cell. Optionally, as a container (container), the first information is carried in the RRC message. It should be noted that, because the first network device cannot interpret content of the first information recorded in the air interface protocol format of the RAT corresponding to the first cell, the first information needs to be forwarded to the second network device. To enable the first network device to successfully forward the connection failure report information to the second network device, identification information of the first cell and/or identification information of the second network device to which the first cell belongs may be further carried outside the container in the RRC message, so that the first network device can determine the second network device based on the carried identification information of the first cell and/or identification information of the second network device to which the first cell belongs, and successfully forward the connection failure report information to the second network device.

For example, if an air interface corresponding to the second cell is E-UTRA, when a type of a core network connected to the terminal device in the second cell is EPC or 5GC, and an air interface corresponding to the first cell is NR, the terminal device may encapsulate, in an NR air interface protocol format, the first information recorded in the first cell by the terminal device, include the first information as a container in an RRC message encapsulated in an E-UTRA air interface protocol format, and send the RRC message to the first network device to which the second cell belongs. Optionally, to enable the first network device to send, after receiving the first information, the first information to the second network device to which the first cell belongs, the identification information of the first cell or the identification information of the second network device to which the first cell belongs may be further carried outside the container in the RRC message. Further optionally, identification information of the terminal device and the like may be further carried.

It can be learned that according to the information processing method provided in this embodiment of this application, the terminal device camps on or is connected to the first cell that is served by the network device and whose air interface is NR, and records the first information of the terminal device in the first cell. After the terminal device performs cell selection or cell reselection, is connected to the second cell, and establishes the RRC connection to the second cell, the terminal device may send the first information to the first network device through the second cell. In this way, the first information recorded by the terminal device is reported to the first network device to which the second cell belongs, so that cross-RAT reporting of information recorded by the terminal device is implemented.

It should be noted that, in this embodiment of this application, when the terminal device sends the first information to the first network device through the second cell in S204, the terminal device may determine, in at least two possible implementations, to send the first information to the first network device. For example, for a determining method, refer to the following:

In a possible implementation, the terminal device may actively determine whether to send the first information to the first network device through the second cell. For example, the terminal device may determine whether a type of a core network accessed in the second cell is the same as a core network type recorded in the first information. When the air interface type of the second cell is different from the air interface type of the first cell, if the type of the core network accessed in the second cell is the same as the core network type recorded in the first information, the terminal device sends the first information to the first network device through the second cell, so that the first network device obtains the first information recorded in the first cell by the terminal device. On the contrary, if a type of a core network that the terminal device accesses in the second cell is different from a core network type recorded in the first information, the terminal device does not send the first information to the first network device through the second cell. For another example, the terminal device determines whether a type of a core network accessed in the second cell is the same as a core network type recorded in the first information. When the air interface type of the second cell is the same as the air interface type of the first cell (for example, the air interface types are both E-UTRA), if the type of the core network accessed in the second cell is the same as the core network type recorded in the first information, the terminal device sends the first information to the first network device through the second cell, so that the first network device obtains the first information recorded in the first cell by the terminal device. On the contrary, if a type of a core network that the terminal device accesses in the second cell is different from a core network type recorded in the first information, the terminal device does not send the first information to the first network device through the second cell. In the possible implementation, the terminal device may actively determine whether to send the first information to the first network device through the second cell, so that flexibility of reporting the first information is improved.

For example, the type of the core network accessed by the terminal device in the second cell is a 5G core network. If the core network type recorded in the first information is also the 5G core network, it may be determined that the type of the core network accessed in the second cell is the same as the core network type recorded in the first information. In this case, the terminal device may send the first information to the first network device through the second cell, so that the first network device obtains the first information recorded in the first cell by the terminal device.

In a possible implementation, the terminal device may determine whether the air interface type corresponding to the second cell is the same as an air interface type that is of the terminal device and that supports reporting of the first information by default. If the air interface type corresponding to the second cell is the same as the air interface type that is of the terminal device and that supports reporting of the first information by default, the terminal device sends the first information to the first network device through the second cell, so that the first network device obtains the first information recorded in the first cell by the terminal device. On the contrary, if the air interface type corresponding to the second cell is different from the air interface type that is of the terminal device and that supports reporting of the first information by default, the terminal device does not send the first information to the first network device through the second cell. For example, when the air interface type of the second cell is NR, and the air interface type of the first cell is E-UTRA, if the terminal device supports reporting, by using an NR cell, the first information recorded in an E-UTRA cell, the terminal device sends the first information to the first network device through the second cell. Similarly, when the air interface type of the second cell is E-UTRA, and the air interface type of the first cell is NR, if the terminal device supports reporting, by using an E-UTRA cell, the first information recorded in an NR cell, the terminal device sends the first information to the first network device through the second cell.

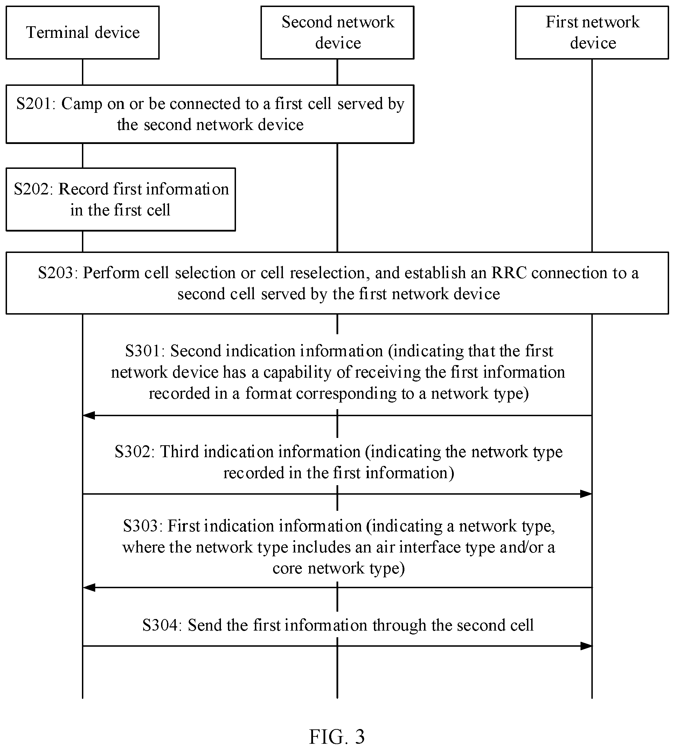

In another possible implementation, the terminal device may receive the first indication information from the first network device, and the first indication information indicates the terminal device to report information recorded by using the first RAT. Optionally, the first indication information indicates a network type, and the network type includes an air interface type and/or a core network type. The air interface type herein may be E-UTRA or NR, and the core network type may be 5GC or EPC. For example, the network type may be NG-RAN, a core network type corresponding to NG-RAN is 5GC, and the air interface type may be E-UTRA or NR. The terminal device determines, based on the first indication information, whether to send the first information to the first network device through the second cell. Specifically, for a determining method, refer to FIG. 3. FIG. 3 is a schematic diagram of a method for determining to send first information to a first network device according to an embodiment of this application. The method may include the following steps.

S301: The first network device sends second indication information to a terminal device.

The second indication information indicates that the first network device has a capability of receiving the first information recorded in a format corresponding to a network type. The format corresponding to the network type may be understood as a format corresponding to an air interface type. For example, the second indication information may be carried in a system message, for example, carried in one or two bits in the system message.

S302: After receiving the second indication information, the terminal device sends third indication information to the first network device, where the third indication information indicates a network type recorded in the first information. For example, the network type herein may include an air interface type corresponding to a cell to which the terminal device is connected when an RLF or a handover failure occurs, and the network type may further include a type of a core network to which the terminal device is connected when the RLF or the handover failure occurs.

The terminal device sends the third indication information to the first network device, so that the first network device determines, based on the third indication information, an air interface type used by the terminal device and/or a type of a core network to which the terminal device is connected when the terminal device records the first information, and then indicates, when necessary, the terminal device to report the first information.

S303: After receiving the third indication information, the first network device sends first indication information to the terminal device, where the first indication information indicates a network type. If the network type indicated by the first indication information includes N air interface types, after receiving the first indication information, the terminal device compares the air interface type recorded in the first information with the N air interface types indicated by the first indication information, where N is a positive integer. If the air interface type recorded in the first information is the same as one of the N air interface types indicated by the first indication information, the terminal device sends the first information to the first network device through a second cell. If the air interface type recorded in the first information is the same as none of the N air interface types indicated by the first indication information, the terminal device does not send the first information to the first network device through the second cell.

If the network type indicated by the first indication information includes M core network types, after receiving the first indication information, the terminal device compares the core network type recorded in the first information with the M core network types indicated by the first indication information, where M is a positive integer. If the core network type recorded in the first information is the same as one of the M core network types indicated by the first indication information, the terminal device sends the first information to the first network device through the second cell. If the core network type recorded in the first information is the same as none of the M core network types indicated by the first indication information, the terminal device does not send the first information to the first network device through the second cell.

If the network type indicated by the first indication information includes N air interface types and M core network types, after receiving the first indication information, the terminal device may respectively compare the air interface type and the core network type that are recorded in the first information with the N air interface types and the M core network types that are indicated by the first indication information, to determine whether to send the first information to the first network device through the second cell. A specific determining manner is similar to a determining manner used when the air interface type recorded in the first information is compared with the air interface types indicated by the first indication information and a determining manner used when the core network type recorded in the first information is compared with the core network types indicated by the first indication information. Details are not described herein again in this embodiment of this application.

S304: The terminal device sends the first information to the first network device through the second cell.

In implementations shown in S301 to S304, the terminal device sends the first information to the first network device through the second cell only after receiving the indication information sent by the first network device. In other words, whether the terminal device reports the first information is controlled by the first network device. In this way, the first network device may determine, based on an actual requirement of the first network device, whether the terminal device needs to report the first information. This satisfies the requirement of the first network device.

In another possible scenario, a first cell and the second cell correspond to a same air interface type, but types of core networks that the terminal device accesses in the two cells are different. For example, the air interface type corresponding to the first cell and the air interface type corresponding to the second cell are both E-UTRA, but a type of a core network accessed by the terminal device in the first cell is a 4G core network, and a type of a core network accessed by the terminal device in the second cell is a 5G core network. It may be understood that the type of the core network is not limited in this embodiment of this application. In this scenario, an implementation method in which the terminal device records the first information of the terminal device in the first cell, and sends the first information to the first network device through the second cell is similar to implementation methods in the embodiments shown in FIG. 2 and FIG. 3. For details, refer to related descriptions in the embodiments shown in FIG. 2 and FIG. 3.

It should be noted that in a possible implementation, step S301 may be omitted. In this case, the terminal device actively performs step S302, to be specific, the terminal device does not need to obtain a network support capability of the first network device, that is, actively reports, to the first network device, the network type recorded in the first information recorded by the terminal device. In another possible implementation, step S301 and step S302 may be omitted. In this case, the first network device actively performs step S303, to be specific, the first network device does not need to learn of the network type recorded in the first information recorded by the terminal device, but directly requests the terminal device to send first information matching a specific network type. In another possible implementation, steps S302 and S303 may be omitted, to be specific, the first network device sends the second indication information to the terminal device, so that the terminal device learns of the network support capability of the first network device, and the terminal device determines, based on the network support capability of the first network device, whether to send the first information to the first network device through the second cell.

It should be noted that after the terminal device sends the first information to the first network device through the second cell, the first network device may process the first information. For example, the processing may include parsing processing, storage processing, and the like. Optionally, when the first information includes connection failure report information, the first network device may determine, based on the connection failure report information, a cause of a connection failure of the terminal device. Specifically, at least two possible determining methods may be included.

In a possible implementation, the first network device may directly determine, based on the connection failure report information, the cause of the connection failure of the terminal device. The cause of the connection failure includes any one of premature handover of the terminal device, delayed handover of the terminal device, or handover of the terminal device to an incorrect cell.

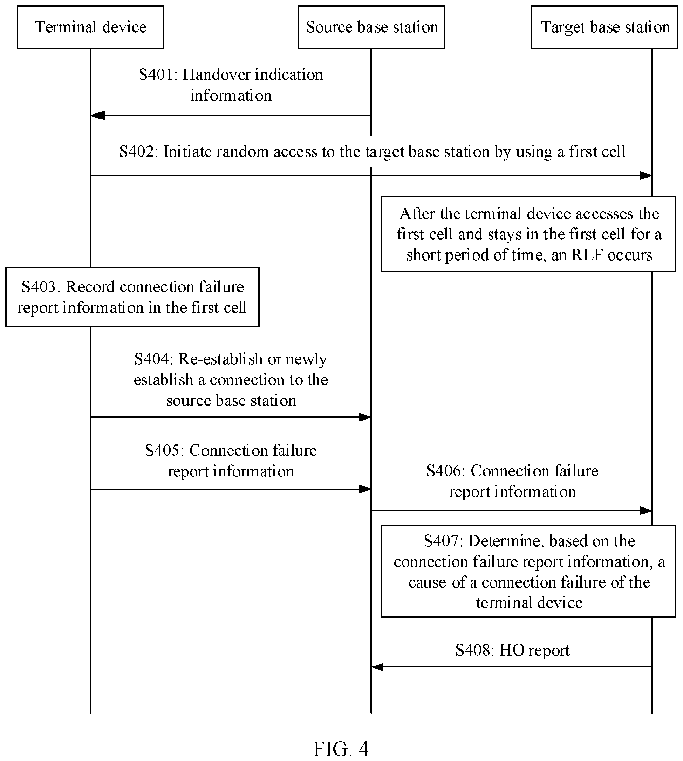

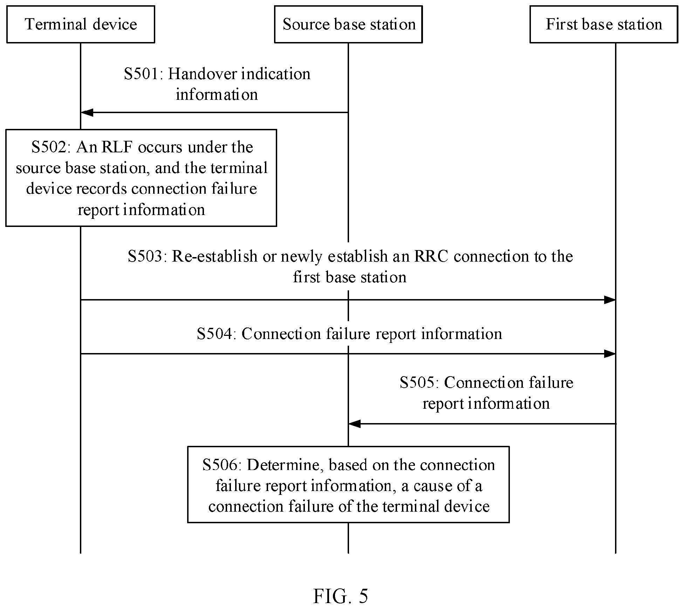

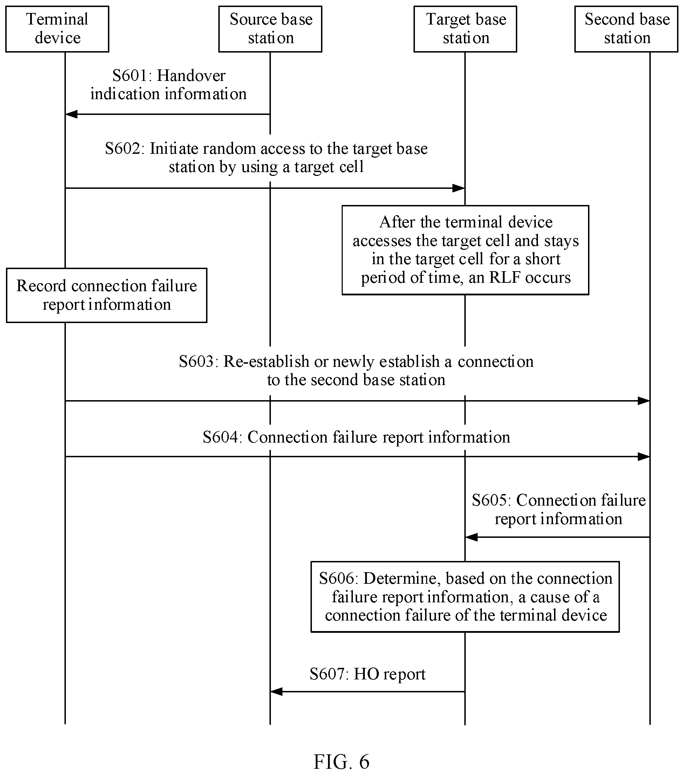

In a possible implementation, the first network device may send the connection failure report information to a second network device to which the first cell belongs, so that the second network device determines, based on the connection failure report information, the cause of the connection failure of the terminal device, and sends the cause of the connection failure to the first network device. The cause of the connection failure includes any one of premature handover of the terminal device, delayed handover of the terminal device, or handover of the terminal device to an incorrect cell. By using the embodiments shown in FIG. 4 to FIG. 6, the following provides detailed descriptions of determining the cause of the connection failure of the terminal device. FIG. 4 is a schematic diagram of determining that premature handover of a terminal device occurs according to an embodiment of this application. FIG. 5 is a schematic diagram of determining that delayed handover of a terminal device occurs according to an embodiment of this application. FIG. 6 is a schematic diagram of determining that incorrect handover of a terminal device occurs according to an embodiment of this application.

In a scenario of determining premature handover, for example, refer to FIG. 4. A RAT of a second cell is different from a RAT of a first cell. A first network device to which the second cell belongs is a source base station, and a second network device to which the first cell belongs is a target base station. The source base station is an ng-eNB or an eNB, and the target base station is a gNB; or the source base station is a gNB, and the target base station is an ng-eNB or an eNB. The ng-eNB is an evolved next generation LTE base station, and the ng-eNB may be connected only to a 5GC or an EPC, or may be connected to both the 5GC and the EPC. A method for determining premature handover by the source base station may include the following steps.

S401: The source base station sends handover indication information to a terminal device.

The handover indication information indicates the terminal device to be handed over to a target cell, the target cell is the first cell, and a base station to which the first cell belongs is the target base station. For example, the handover indication information may include an identifier of the first cell.

S402: The terminal device initiates random access to the target base station by using the first cell.

After the terminal device successfully accesses the first cell, if an RLF occurs, the terminal device records connection failure report information indicating that an RLF of the terminal device occurs in the first cell, and triggers an RRC connection re-establishment/RRC connection new establishment procedure.

S403: The terminal device records the connection failure report information in the first cell.

It should be noted that an implementation of recording, by the terminal device, the connection failure report information in the first cell in S403 is similar to an implementation of S202 in the embodiment shown in FIG. 2. Refer to related descriptions in S202 in the embodiment shown in FIG. 2. Details are not described herein again in this embodiment of this application.

S404: The terminal device re-establishes or newly establishes a connection to the source base station.

S405: The terminal device sends the connection failure report information to the source base station through the second cell.

Optionally, before sending the connection failure report information to the source base station through the second cell, the terminal device may encapsulate the connection failure report information in an air interface protocol format of the RAT corresponding to the first cell, and send the encapsulated connection failure report information to the source base station. Optionally, as a container (container), the connection failure report information is carried in an RRC message. It should be noted that, because the source base station may not be capable of interpreting content of the connection failure report information recorded in the air interface protocol format of the RAT corresponding to the first cell, the connection failure report information needs to be forwarded to the target base station, namely, a network device to which the first cell belongs. To enable the source base station to successfully forward the connection failure report information to the target base station, identification information of the first cell and/or identification information of the target base station to which the first cell belongs may be further carried outside the container in the RRC message, so that the source base station can determine the target base station based on the carried identification information of the first cell and/or identification information of the target base station to which the first cell belongs, and successfully forward the connection failure report information to the target base station.

S406: The source base station sends the connection failure report information to the target base station. For example, if there is a direct interface between the source base station and the target base station, for example, an X2 interface or an Xn interface, the source base station sends the connection failure report information to the target base station through the interface. In another example, if there is no direct interface between the source base station and the target base station, the source base station sends the connection failure report information to a core network connected to the source base station, and further sends the connection failure report information to the target base station through the core network. For example, when the source base station is connected to a 4G core network through an S1 interface, and the target base station is connected to a 5G core network through an NG interface, the source base station sends the connection failure report information to the 4G core network through the S1 interface, and indicates the identification information of the target base station, for example, a global identifier of the target base station, and may further indicate a tracking area code (tracking area code, TAC). Based on the identification information of the target base station or after determining that a core network connected to the target base station is the 5G core network, the 4G core network sends the connection failure report information to the 5G core network, and also indicates the identification information of the target base station. The 5G core network sends the connection failure report information to the target base station. A process in which the source base station is connected to the 5G core network through an NG interface, and the target base station is connected to the 4G core network through an S1 interface is similar to the foregoing process, and details are omitted herein.

S407: The target base station determines, based on the connection failure report information, a cause of a connection failure of the terminal device.

After receiving the connection failure report information sent by the source base station, the target base station may determine, based on the connection failure report information, the cause of the connection failure of the terminal device. For example, the cause of the connection failure of the terminal device is the premature handover of the terminal device.

S408: After determining the cause of the connection failure, the target base station sends an HO report to the source base station.

It may be understood that a manner in which the target base station sends the HO report to the source base station is similar to a manner in which the source base station sends the connection failure report information to the target base station, that is, the HO report is sent through a direct interface between the source base station and the target base station, or is forwarded through a core network. Refer to a method described in step S406, and details are omitted herein.

The HO report is used to indicate the cause of the connection failure of the terminal device. For example, the cause of the connection failure is the premature handover of the terminal device.

In the embodiment shown in FIG. 4, after the terminal device records the connection failure report information in the first cell, the terminal device encapsulates the connection failure report information in a message format of the RAT corresponding to the first cell, and sends the encapsulated connection failure report information to the source base station through the second cell, so that the source base station may forward the connection failure report information to the target base station to which the first cell belongs. The target base station may determine, based on the connection failure report information, the cause of the connection failure, for example, the premature handover of the terminal device, and send, to the source base station, the HO report used to indicate the premature handover of the terminal device. In this way, the source base station obtains the cause of the connection failure of the terminal device.

It should be noted that, in the foregoing embodiment shown in FIG. 4, the connection failure report information is recorded by the terminal device after the terminal device successfully accesses the first cell and stays in the first cell for a short period of time and the RLF occurs. In another case, the RLF occurs in a process in which the terminal device accesses the first cell. The terminal device records the connection failure report information, and sends the connection failure report information to the source base station, so that the source base station may forward the connection failure report information to the target base station to which the first cell belongs. A method in which the target base station determines, based on the connection failure report information, the cause of the connection failure of the terminal device, and sends the HO report to the source base station is similar to the method in the embodiment shown in FIG. 4. For details, refer to related descriptions in the embodiment shown in FIG. 4. Details are not described herein again in this embodiment of this application. The HO report is sent to the source base station, so that after receiving the HO report, the source base station can obtain, based on the HO report, the cause of the connection failure of the terminal device, and further adjust and optimize a handover parameter of the first cell. It may be understood that, when the RLF occurs in the process in which the terminal device accesses the first cell, the first information may further include a RACH report. Optionally, the source base station may further send the RACH report in the first information to the target base station, so that the target base station adjusts and optimizes a RACH configuration of the first cell based on information in the RACH report.

In a scenario of determining delayed handover, for example, refer to FIG. 5. Similarly, a RAT corresponding to a second cell is different from a RAT corresponding to a first cell. A first network device to which the second cell belongs is a target base station, and a second network device to which the first cell belongs is a source base station. The target base station is an ng-eNB or an eNB, and the source base station is a gNB; or the target base station is a gNB, and the source base station is an ng-eNB or an eNB. A method for determining delayed handover by the source base station may include the following steps.

S501: The source base station sends handover indication information to a terminal device.

The handover indication information indicates the terminal device to be handed over to a target cell served by the target base station. For example, the handover indication information may include an identifier of the target cell.

It should be noted that step S501 is an optional step. To be specific, an RLF of the terminal occurs before the base station sends the handover indication information to the terminal device.

S502: If the RLF of the terminal device occurs under the source base station, the terminal device records connection failure report information indicating that the RLF occurs in the first cell served by the source base station.

It should be noted that an implementation of recording, by the terminal device, the connection failure report information indicating that the RLF occurs in the first cell in S502 is similar to an implementation of S202 in the embodiment shown in FIG. 2. Refer to related descriptions in S202 in the embodiment shown in FIG. 2. Details are not described herein again in this embodiment of this application.

S503: The terminal device re-establishes or newly establishes an RRC connection to a first base station.

S504: The terminal device sends the connection failure report information to the first base station.

It should be noted that an implementation of sending, by the terminal device, the connection failure report information to the first base station in S504 is similar to an implementation of S405 in the embodiment shown in FIG. 4. Refer to related descriptions in S405 in the embodiment shown in FIG. 4. Details are not described herein again in this embodiment of this application.

S505: The first base station sends the connection failure report information to the source base station.

S506: The source base station determines, based on the connection failure report information, a cause of a connection failure of the terminal device.

After receiving the connection failure report information, the source base station may determine, based on the connection failure report information, the cause of the connection failure of the terminal device, for example, delayed handover of the terminal device, so as to obtain the cause of the connection failure of the terminal device.

It should be noted that, in the embodiment shown in FIG. 5, if S501 in which the source base station sends the handover indication information to the terminal device is performed, the first base station may be the target base station, or may be another base station. If S501 in which the source base station sends the handover indication information to the terminal device is not performed, the first base station is the target base station.

In a scenario of determining incorrect handover, for example, refer to FIG. 6. A RAT of a second cell is different from a RAT of a first cell. A first network device to which the second cell belongs is a second base station, and a second network device to which the first cell belongs is a target base station. A RAT of a cell served by a source base station is not limited, and the RAT of the cell served by the source base station may be the same as the RAT of the first cell, or may be different from the RAT of the first cell. A method for determining handover to an incorrect cell by the source base station may include the following steps.

S601: The source base station sends handover indication information to a terminal device.

The handover indication information is used to indicate the terminal device to be handed over to a target cell, and a base station to which the target cell belongs is the target base station. For example, the handover indication information may include an identifier of the target base station or an identifier of the target cell.

S602: The terminal device initiates random access to the target base station by using the target cell.

After the terminal device successfully accesses the target cell and stays in the target cell for a short period of time, an RLF occurs, or when the terminal device initiates the random access to the target base station by using the target cell, the random access fails. In this case, the target cell is the first cell, and the terminal device records connection failure report information indicating that the RLF of the terminal device occurs in the first cell served by the target base station, and triggers an RRC connection re-establishment/RRC connection new establishment procedure.

It should be noted that an implementation of recording, by the terminal device, the connection failure report information in the first cell in S602 is similar to an implementation of S202 in the embodiment shown in FIG. 2. Refer to related descriptions in S202 in the embodiment shown in FIG. 2. Details are not described herein again in this embodiment of this application.

S603: The terminal device re-establishes or newly establishes a connection to the second base station.

S604: The terminal device sends the connection failure report information to the second base station through the second cell.

It should be noted that an implementation of sending, by the terminal device, the connection failure report information to the first base station in S604 is similar to an implementation of S405 in the embodiment shown in FIG. 4. Refer to related descriptions in S405 in the embodiment shown in FIG. 4. Details are not described herein again in this embodiment of this application.

S605: The second base station sends the connection failure report information to the target base station.

S606: The target base station determines, based on the connection failure report information, a cause of a connection failure of the terminal device.

After receiving the connection failure report information sent by the source base station, the target base station may determine, based on the connection failure report information, the cause of the connection failure of the terminal device. For example, the cause of the connection failure of the terminal device is the incorrect handover of the terminal device.

S607: After determining the cause of the connection failure, the target base station sends an HO report to the source base station.

The HO report is used to indicate the cause of the connection failure of the terminal device. For example, the cause of the connection failure is the incorrect handover of the terminal device. The incorrect handover may be understood as incorrect handover to a cell. The HO report is sent to the source base station, so that after receiving the HO report, the source base station can obtain, based on the HO report, the cause of the connection failure of the terminal device, and further adjust and optimize a handover parameter of the cell served by the source base station.

Therefore, it can be learned that, in the embodiment shown in FIG. 6, after the terminal device records the connection failure report information in the first cell, the terminal device encapsulates the connection failure report information in an air interface message format of the RAT corresponding to the first cell, and sends the encapsulated connection failure report information to the second base station through the second cell, so that the second base station may forward the connection failure report information to the target base station to which the first cell belongs. The target base station may determine, based on the connection failure report information, the cause of the connection failure, for example, the incorrect handover of the terminal device, and send, to the source base station, the HO report used to indicate the incorrect handover of the terminal device. In this way, the source base station obtains the cause of the connection failure of the terminal device.

It should be noted that, in the embodiment shown in FIG. 6, the connection failure report information is recorded by the terminal device after the terminal device successfully accesses the first cell and stays in the first cell for a short period of time and the RLF occurs. In another case, the RLF occurs in a process in which the terminal device accesses the target base station. The terminal device records the connection failure report information, and sends the connection failure report information to the target base station. In this way, a method in which the target base station determines, based on the connection failure report information, the cause of the connection failure of the terminal device, and sends the HO report to the source base station is similar to the method in the embodiment shown in FIG. 6. For details, refer to related descriptions in the embodiment shown in FIG. 6. Details are not described herein again in this embodiment of this application.

It should be noted that, in the foregoing embodiments, a method and a step implemented by a terminal device may also be implemented by a component (for example, a chip or a circuit) that can be used in the terminal device, and a method and a step implemented by a network device may also be implemented by a component (for example, a chip or a circuit) that can be used in the network device.

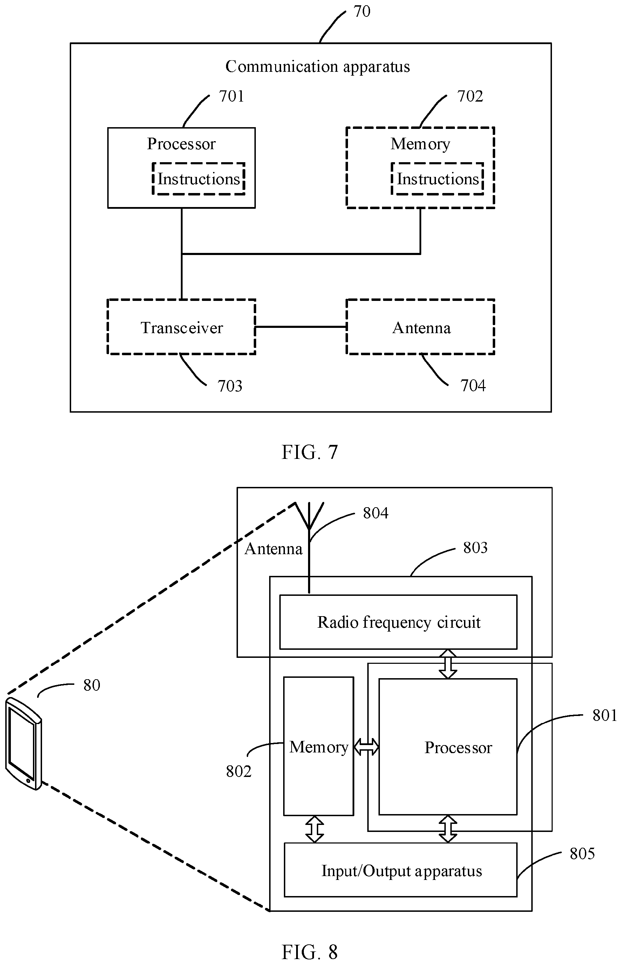

FIG. 7 is a schematic diagram of a structure of a communication apparatus 70 according to an embodiment of this application. For example, refer to FIG. 7. The communication apparatus 70 in this embodiment may be a terminal device (or a component that can be used in the terminal device) mentioned in the foregoing method embodiments, or a network device (or a component that can be used in the network device) mentioned in the foregoing method embodiments. The communication apparatus 70 may be configured to implement a method that corresponds to the terminal device or the network device and that is described in the foregoing method embodiments. For details, refer to descriptions in the foregoing method embodiments.

The communication apparatus 70 may include one or more processors 701. The processor 701 may also be referred to as a processing unit, and may implement a specific control or processing function. The processor 701 may be a general-purpose processor, a dedicated processor, or the like. For example, the processor 701 may be a baseband processor or a central processing unit. The baseband processor may be configured to process a communication protocol and communication data. The central processing unit may be configured to control the communication apparatus 70, execute a software program, and process data of the software program.

In an optional design, the processor 701 may alternatively store instructions or data (for example, intermediate data). The instructions may be run by the processor 701, so that the communication apparatus 70 performs a method that corresponds to the network device or the terminal device and that is described in the foregoing method embodiments.

In another possible design, the communication apparatus 70 may include a circuit. The circuit may implement a sending, receiving, or communication function in the foregoing method embodiments.

Optionally, the communication apparatus 70 may include one or more memories 702. The memory may store instructions, and the instructions may be run on the processor 701, so that the communication apparatus 70 performs a method described in the foregoing method embodiments.

Optionally, the memory 702 may alternatively store data. The processor 701 and the memory 702 may be independent modules or devices, or may be integrated together.

Optionally, the communication apparatus 70 may further include a transceiver 703 and/or an antenna 704. The processor 701 may also be referred to as a processing unit, and controls the communication apparatus 70 (the terminal device or the network device). The transceiver 703 may also be referred to as a transceiver unit, a transceiver machine, a transceiver circuit, an input/output interface, or the like, and is configured to implement signal or information receiving and sending functions of the communication apparatus 70.

For specific implementation processes of the transceiver 703 and the processor 701, refer to related descriptions in the foregoing method embodiments. Details are not described herein again.

The processor 701 may be configured to record first information of a terminal device in a first cell, where the first information includes connection failure report information of a radio link failure (RLF) or a handover failure, and/or measurement information obtained by performing measurement by using a minimization of drive tests (MDT) technology, and a radio access technology (RAT) of the first cell is a first RAT.

The transceiver 703 may be configured to send the first information to a first network device through a second cell, where a RAT of the second cell is a second RAT, the second RAT is different from the first RAT, and the first network device is a network device to which the second cell belongs.

Optionally, the transceiver 703 may be specifically configured to: if a type of a core network that the terminal device accesses in the second cell is the same as a core network type recorded in the first information, send the first information to the first network device through the second cell.

Optionally, the transceiver 703 may be specifically configured to: receive first indication information from the first network device, where the first indication information indicates a network type, the network type includes an air interface type and/or a core network type, and the air interface type is the first RAT or the second RAT; and send the first information to the first network device through the second cell based on the first indication information.

Optionally, the transceiver 703 may be further configured to send third indication information to the first network device, where the third indication information indicates a network type recorded in the first information.

Optionally, the transceiver 703 may be further configured to receive second indication information from the first network device, where the second indication information indicates that the first network device has a capability of receiving the first information recorded in a format corresponding to the network type.

Optionally, the processor 701 may be specifically configured to record the first information of the terminal device in the first cell in a format corresponding to the first RAT.

The processor 701 and the transceiver 703 that are described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor 701 and the transceiver 703 may alternatively be manufactured by using various IC technologies, for example, a complementary metal oxide semiconductor (complementary metal oxide semiconductor, CMOS), an n-type metal oxide semiconductor (n-type metal oxide semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Although in the foregoing descriptions of the embodiments, the communication apparatus 70 is described by using the terminal device or the network device as an example, a scope of the communication apparatus 70 described in this application is not limited to the terminal device or the network device, and a structure of the communication apparatus 70 may not be limited to FIG. 7. The communication apparatus 70 may alternatively be a component or a module in the terminal device or the network device, for example, a chip or a chip subsystem. The communication apparatus 70 may alternatively be a module embedded in another device.

FIG. 8 is a schematic diagram of a structure of a terminal device 80 according to an embodiment of this application. The terminal device 80 may be a terminal device in the foregoing embodiments of this application. For ease of description, FIG. 8 shows only main components of the terminal device 80. As shown in FIG. 8, the terminal device 80 includes a processor 801, a memory 802, a control circuit 803, an antenna 804, and an input/output apparatus 805. The processor 801 is mainly configured to: process a communication protocol and communication data, control the entire terminal device 80, execute a software program, and process data of the software program. The memory 802 is mainly configured to store the software program and data. A radio frequency circuit is mainly configured to: perform conversion between a baseband signal and a radio frequency signal, and process the radio frequency signal. The antenna 804 is mainly configured to receive and send a radio frequency signal in an electromagnetic wave form. The input/output apparatus 805, such as a touchscreen, a display screen, or a keyboard, is mainly configured to: receive data entered by a user, and output data to the user.

After the terminal device 80 is powered on, the processor 801 may read a software program in a storage unit, explain and execute instructions of the software program, and process data of the software program. When data needs to be sent in a wireless manner, the processor 801 performs baseband processing on the to-be-sent data, and outputs a baseband signal to a radio frequency circuit. After performing radio frequency processing on the baseband signal, the radio frequency circuit sends a radio frequency signal outward in an electromagnetic wave form through the antenna 804. When data is sent to the terminal device 80, the radio frequency circuit receives the radio frequency signal through the antenna 804, converts the radio frequency signal into a baseband signal, and outputs the baseband signal to the processor 801, and the processor 801 converts the baseband signal into data and processes the data.

A person skilled in the art may understand that, for ease of description, FIG. 8 shows only one memory 802 and one processor 801. An actual terminal device 80 may include a plurality of processors 801 and a plurality of memories 802. The memory 802 may also be referred to as a storage medium, a storage device, or the like. This is not limited in the embodiments of this application.

In an optional implementation, the processor 801 may include a baseband processor and/or a central processing unit. The baseband processor is mainly configured to process the communication protocol and the communication data. The central processing unit is mainly configured to: control the entire terminal device 80, execute the software program, and process the data of the software program. The processor 801 in FIG. 8 integrates functions of the baseband processor and the central processing unit. A person skilled in the art may understand that the baseband processor and the central processing unit may be processors 801 independent of each other, and are interconnected by using a technology such as a bus. A person skilled in the art may understand that the terminal device 80 may include a plurality of baseband processors to adapt to different network standards, the terminal device 80 may include a plurality of central processing units to enhance a processing capability of the terminal device, and components of the terminal device 80 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor 801, or may be stored in the storage unit in a form of a software program. The processor 801 executes the software program to implement a baseband processing function.

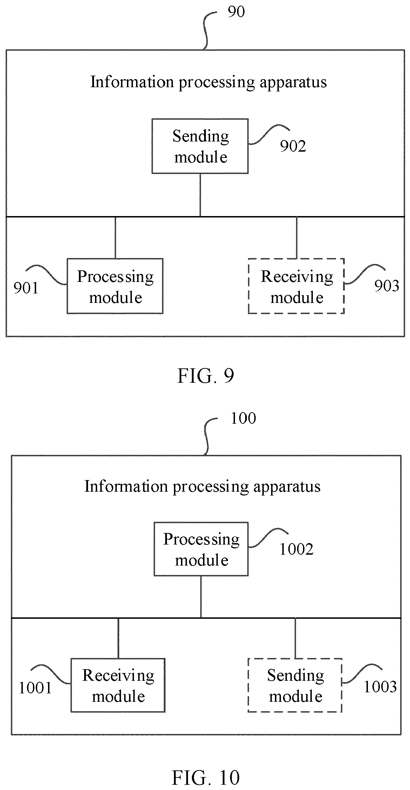

FIG. 9 is a schematic diagram of a structure of an information processing apparatus 90 according to an embodiment of this application. For example, refer to FIG. 9. The information processing apparatus 90 may include:
a processing module 901, configured to record first information of a terminal device in a first cell, where the first information may include connection failure report information of a radio link failure (RLF) or a handover failure, and/or measurement information obtained by performing measurement by using a minimization of drive tests (MDT) technology, and a radio access technology (RAT) of the first cell is a first RAT; and
a sending module 902, configured to send the first information to a first network device through a second cell, where a RAT of the second cell is a second RAT, the second RAT is different from the first RAT, and the first network device is a network device to which the second cell belongs.

Optionally, the sending module 902 is specifically configured to: if a type of a core network that the terminal device accesses in the second cell is the same as a core network type recorded in the first information, send the first information to the first network device through the second cell.

Optionally, the information processing apparatus 90 may further include a receiving module 903.

The receiving module 903 is configured to receive first indication information from the first network device, where the first indication information indicates a network type, the network type may include an air interface type and/or a core network type, and the air interface type is the first RAT or the second RAT.

The sending module 902 is specifically configured to send the first information to the first network device through the second cell based on the first indication information.

Optionally, the sending module 902 is further configured to send third indication information to the first network device, where the third indication information indicates a network type recorded in the first information.

Optionally, the receiving module 903 is further configured to receive second indication information from the first network device, where the second indication information indicates that the first network device has a capability of receiving the first information recorded in a format corresponding to the network type.

Optionally, the processing module 901 is specifically configured to record the first information of the terminal device in the first cell in a format corresponding to the first RAT.

Optionally, the sending module 902 is further configured to send, to the first network device, identification information of the first cell and/or identification information of a second network device to which the first cell belongs.

Optionally, the first information may further include a random access channel (RACH) report and/or movement history information that is of the terminal device.

Optionally, the processing module 901 in the embodiment shown in FIG. 9 may be the processor in the embodiment shown in FIG. 7, that is, an operation corresponding to the processing module 901 may be performed by using the processor. The sending module 902 and the receiving module 903 in the embodiment shown in FIG. 9 may be the transceiver in the embodiment shown in FIG. 7, that is, operations corresponding to the sending module 902 and the receiving module 903 may be performed by using the transceiver. The processor may also be referred to as a processing unit, and may implement a specific control or processing function. The processor may be a general-purpose processor, a dedicated processor, or the like. For example, the processor may be a baseband processor or a central processing unit. The baseband processor may be configured to process a communication protocol and communication data. The central processing unit may be configured to control the communication apparatus, execute a software program, and process data of the software program.

The information processing apparatus 90 provided in this embodiment of this application may be configured to execute the technical solutions of the network device in the information processing method embodiments shown in FIG. 2 to FIG. 6. An implementation principle and a technical effect of the information processing apparatus 90 are similar to an implementation principle and a technical effect in the method embodiments. Details are not described herein again.

FIG. 10 is a schematic diagram of a structure of another information processing apparatus 100 according to an embodiment of this application. For example, refer to FIG. 10. The information processing apparatus 100 may include:
a receiving module 1001, configured to receive first information from a terminal device through a second cell, where the first information records connection failure report information of a radio link failure (RLF) or a handover failure of the terminal device in a first cell, and/or measurement information obtained by performing measurement by using a minimization of drive tests (MDT) technology, a radio access technology (RAT) of the first cell is a first RAT, a RAT of the second cell is a second RAT, and the second RAT is different from the first RAT; and
a processing module 1002, configured to process the first information.

Optionally, the information processing apparatus 100 may further include a sending module 1003.

The sending module 1003 is configured to send first indication information to the terminal device, where the first indication information indicates a network type, the network type may include an air interface type and/or a core network type, and the air interface type is the first RAT or the second RAT.

Optionally, the receiving module 1001 is further configured to receive third indication information from the terminal device, where the third indication information is used to indicate a network type recorded in the first information.

Optionally, the sending module 1003 is further configured to send second indication information to the terminal device, where the second indication information is used to indicate that the first network device has a capability of receiving the first information recorded in a format corresponding to the network type.

Optionally, the receiving module 1001 is further configured to receive, from the terminal device, identification information of the first cell and/or identification information of a second network device to which the first cell belongs.

Optionally, when the first information includes the connection failure report information, the processing module 1002 is further configured to determine, based on the connection failure report information, a cause of a connection failure of the terminal device, where the cause of the connection failure may include any one of premature handover of the terminal device, delayed handover of the terminal device, or handover of the terminal device to an incorrect cell.

Optionally, when the first information includes the connection failure report information, the sending module 1003 is further configured to send the connection failure report information to the second network device, where the second network device is a network device to which the first cell belongs; and
the receiving module 1001 is further configured to receive a cause of a connection failure from the second network device, where the cause of the connection failure is determined based on the connection failure report information.

Optionally, the first information may further include a random access channel (RACH) report and/or movement history information that is of the terminal device.

Optionally, the processing module 1002 in the embodiment shown in FIG. 10 may be the processor in the embodiment shown in FIG. 7, that is, an operation corresponding to the processing module 1002 may be performed by using the processor. The receiving module 1001 and the sending module 1003 in the embodiment shown in FIG. 10 may be the transceiver in the embodiment shown in FIG. 7, that is, operations corresponding to the sending module 1003 and the receiving module 1001 may be performed by using the transceiver. The processor may also be referred to as a processing unit, and may implement a specific control or processing function. The processor may be a general-purpose processor, a dedicated processor, or the like. For example, the processor may be a baseband processor or a central processing unit. The baseband processor may be configured to process a communication protocol and communication data. The central processing unit may be configured to control the communication apparatus, execute a software program, and process data of the software program.

The information processing apparatus 100 provided in this embodiment of this application may be configured to execute the technical solutions of the terminal device in the information processing method embodiments shown in FIG. 2 to FIG. 6. An implementation principle and a technical effect of the information processing apparatus 100 are similar to an implementation principle and a technical effect in the method embodiments.

Details are not described herein again.

An embodiment of this application further provides a communication apparatus. The communication apparatus may execute the technical solutions of the terminal device in the information processing method embodiments shown in FIG. 2 to FIG. 6, or may be configured to execute the technical solutions of the network device in the information processing method embodiments shown in FIG. 2 to FIG. 6. An implementation principle and a technical effect of the communication apparatus are similar to an implementation principle and a technical effect in the method embodiments. Details are not described herein again.

It may be understood that when the communication apparatus may execute the technical solutions of the terminal device in the information processing method embodiments shown in FIG. 2 to FIG. 6, the communication apparatus may be the terminal device, or may be a component that can be used in the terminal device. This is not limited in the embodiments of this application. When the communication apparatus may execute the technical solutions on a network device side in the information processing method embodiments shown in FIG. 2 to FIG. 6, the communication apparatus may be a network device, or may be a component that can be used in a network device. This is not limited in the embodiments of this application.

An embodiment of this application further provides a readable storage medium. The readable storage medium stores a computer program. When the computer program is executed, the computer program is configured to execute the technical solutions of the terminal device in the information processing method embodiments shown in FIG. 2 to FIG. 6, or is configured to execute the technical solutions of the network device in the information processing method embodiments shown in FIG. 2 to FIG. 6. An implementation principle and a technical effect of the computer program are similar to an implementation principle and a technical effect in the method embodiments. Details are not described herein again.

An embodiment of this application further provides a communication system. The communication system may include a terminal device and a network device.

The terminal device is configured to execute the technical solutions of the terminal device in the information processing method embodiments shown in FIG. 2 to FIG. 6, and the network device is configured to execute the technical solutions of the network device in the information processing method embodiments shown in FIG. 2 to FIG. 6. An implementation principle and a technical effect of the communication system are similar to an implementation principle and a technical effect in the method embodiments. Details are not described herein again.

An embodiment of this application further provides a program product. The program product includes a computer program. The computer program is stored in a readable storage medium. At least one processor of a communication apparatus may read the computer program from the readable storage medium. The at least one processor is configured to execute the technical solutions of the terminal device in the information processing method embodiments shown in FIG. 2 to FIG. 6, or is configured to execute the technical solutions of the network device in the information processing method embodiments shown in FIG. 2 to FIG. 6. Details are not described herein again.

It should be noted that in the embodiments of this application, the division into the modules is an example and is merely logical function division, and there may be another division manner during actual implementation. Function modules in the embodiments of this application may be integrated into one processing module, or each of the modules may exist alone physically, or two or more modules may be integrated into one module. The integrated module may be implemented in a form of hardware, or may be implemented in a form of a software function module.

When the integrated module is implemented in the form of a software function module and sold or used as an independent product, the integrated module may be stored in a computer-readable storage medium. Based on such an understanding, the technical solutions of this application essentially, or the part contributing to a current technology, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes: various media that can store program code, such as a USB flash drive, a removable hard disk drive, a read-only memory (Read-Only Memory, ROM), a random access memory (Random Access Memory, RAM), a magnetic disk, and an optical disc.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of procedures or functions in the embodiments of this application are performed. The computer may be a general-purpose computer, a dedicated computer, a computer network, or another programmable apparatus. The computer programs or instructions may be stored in a computer-readable storage medium, or may be transmitted via the computer-readable storage medium. The computer-readable storage medium may be any usable medium accessible by a computer, or a data storage device, such as a server integrating one or more usable media. The usable medium may be a magnetic medium, for example, a floppy disk, a hard disk drive, or a magnetic tape, may be an optical medium, for example, a digital versatile disc (digital versatile disc, DVD), or may be a semiconductor medium, for example, a solid-state drive (solid-state drive, SSD).

In the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that various numbers in the embodiments of this application are merely used for differentiation for ease of description, and are not used to limit the scope of the embodiments of this application. Numbers of the foregoing processes do not mean an execution sequence, and the execution sequence of the processes should be determined based on functions and internal logic of the processes.

## Claims

1. An information processing method, comprising:
recording first information of a terminal device in a first cell, wherein the first information comprises connection failure report information of a radio link failure (RLF) or a handover failure, and/or measurement information obtained by performing measurement by using a minimization of drive tests (MDT) technology, and a radio access technology (RAT) of the first cell is a first RAT; and
sending the first information to a first network device through a second cell, wherein a RAT of the second cell is a second RAT, the second RAT is different from the first RAT, and the first network device is a network device to which the second cell belongs.

2. The method according to claim 1, wherein the sending the first information to a first network device through a second cell comprises:
if a type of a core network that the terminal device accesses in the second cell is the same as a core network type recorded in the first information, sending the first information to the first network device through the second cell.

3. The method according to claim 1, wherein the sending the first information to a first network device through a second cell comprises:
receiving first indication information from the first network device, wherein the first indication information indicates a network type, the network type comprises an air interface type and/or a core network type, and the air interface type is the first RAT or the second RAT; and
sending the first information to the first network device through the second cell based on the first indication information.

4. The method according to claim 3, wherein before the receiving first indication information from the first network device, the method further comprises:
sending third indication information to the first network device, wherein the third indication information indicates a network type recorded in the first information.

5. The method according to claim 4, wherein before the sending third indication information to the first network device, the method further comprises:
receiving second indication information from the first network device, wherein the second indication information indicates that the first network device has a capability of receiving the first information recorded in a format corresponding to the network type.

6. The method according to any one of claims 1 to 5, wherein the recording first information of a terminal device in a first cell comprises:
recording the first information of the terminal device in the first cell in a format corresponding to the first RAT.

7. The method according to any one of claims 1 to 6, further comprising:
sending, to the first network device, identification information of the first cell and/or identification information of a second network device to which the first cell belongs.

8. The method according to any one of claims 1 to 7, wherein
the first information further comprises a random access channel (RACH) report and/or movement history information that is of the terminal device.

9. An information processing method, comprising:
receiving first information from a terminal device through a second cell, wherein the first information records connection failure report information of a radio link failure (RLF) or a handover failure of the terminal device in a first cell, and/or measurement information obtained by performing measurement by using a minimization of drive tests (MDT) technology, a radio access technology (RAT) of the first cell is a first RAT, a RAT of the second cell is a second RAT, and the second RAT is different from the first RAT; and
processing the first information.

10. The method according to claim 9, wherein before the receiving first information from a terminal device through a second cell, the method further comprises:
sending first indication information to the terminal device, wherein the first indication information indicates a network type, the network type comprises an air interface type and/or a core network type, and the air interface type is the first RAT or the second RAT.

11. The method according to claim 10, wherein before the sending first indication information to the terminal device, the method further comprises:
receiving third indication information from the terminal device, wherein the third indication information is used to indicate a network type recorded in the first information.

12. The method according to claim 11, wherein before the receiving third indication information from the terminal device, the method further comprises:
sending second indication information to the terminal device, wherein the second indication information is used to indicate that the first network device has a capability of receiving the first information recorded in a format corresponding to the network type.

13. The method according to any one of claims 9 to 12, further comprising:
receiving, from the terminal device, identification information of the first cell and/or identification information of a second network device to which the first cell belongs.

14. The method according to any one of claims 9 to 13, wherein when the first information comprises the connection failure report information, the method further comprises:
determining, based on the connection failure report information, a cause of a connection failure of the terminal device, wherein the cause of the connection failure comprises any one of premature handover of the terminal device, delayed handover of the terminal device, or handover of the terminal device to an incorrect cell.

15. The method according to any one of claims 9 to 13, wherein when the first information comprises the connection failure report information, the method further comprises:
sending the connection failure report information to the second network device, wherein the second network device is a network device to which the first cell belongs; and
receiving a cause of a connection failure from the second network device, wherein the cause of the connection failure is determined based on the connection failure report information.

16. The method according to any one of claims 9 to 15, wherein
the first information further comprises a random access channel (RACH) report and/or movement history information that is of the terminal device.

17. An information processing apparatus, comprising:
a processing module, configured to record first information of a terminal device in a first cell, wherein the first information comprises connection failure report information of a radio link failure (RLF) or a handover failure, and/or measurement information obtained by performing measurement by using a minimization of drive tests (MDT) technology, and a radio access technology (RAT) of the first cell is a first RAT; and
a sending module, configured to send the first information to a first network device through a second cell, wherein a RAT of the second cell is a second RAT, the second RAT is different from the first RAT, and the first network device is a network device to which the second cell belongs.

18. The apparatus according to claim 17, wherein
the sending module is specifically configured to: if a type of a core network that the terminal device accesses in the second cell is the same as a core network type recorded in the first information, send the first information to the first network device through the second cell.

19. The apparatus according to claim 17, wherein the apparatus further comprises a receiving module;
the receiving module is configured to receive first indication information from the first network device, wherein the first indication information indicates a network type, the network type comprises an air interface type and/or a core network type, and the air interface type is the first RAT or the second RAT; and
the sending module is specifically configured to send the first information to the first network device through the second cell based on the first indication information.

20. The apparatus according to claim 19, wherein
the sending module is further configured to send third indication information to the first network device, wherein the third indication information indicates a network type recorded in the first information.

21. The apparatus according to claim 20, wherein
the receiving module is further configured to receive second indication information from the first network device, wherein the second indication information indicates that the first network device has a capability of receiving the first information recorded in a format corresponding to the network type.

22. The apparatus according to any one of claims 17 to 21, wherein
the processing module is specifically configured to record the first information of the terminal device in the first cell in a format corresponding to the first RAT.

23. The apparatus according to any one of claims 17 to 22, wherein
the sending module is further configured to send, to the first network device, identification information of the first cell and/or identification information of a second network device to which the first cell belongs.

24. The apparatus according to any one of claims 17 to 23, wherein
the first information further comprises a random access channel (RACH) report and/or movement history information that is of the terminal device.

25. An information processing apparatus, comprising:
a receiving module, configured to receive first information from a terminal device through a second cell, wherein the first information records connection failure report information of a radio link failure (RLF) or a handover failure of the terminal device in a first cell, and/or measurement information obtained by performing measurement by using a minimization of drive tests (MDT) technology, a radio access technology (RAT) of the first cell is a first RAT, a RAT of the second cell is a second RAT, and the second RAT is different from the first RAT; and
a processing module, configured to process the first information.

26. The apparatus according to claim 25, wherein the apparatus further comprises a sending module; and
the sending module is configured to send first indication information to the terminal device, wherein the first indication information indicates a network type, the network type comprises an air interface type and/or a core network type, and the air interface type is the first RAT or the second RAT.

27. The apparatus according to claim 26, wherein
the receiving module is further configured to receive third indication information from the terminal device, wherein the third indication information is used to indicate a network type recorded in the first information.

28. The apparatus according to claim 27, wherein
the sending module is further configured to send second indication information to the terminal device, wherein the second indication information is used to indicate that the first network device has a capability of receiving the first information recorded in a format corresponding to the network type.

29. The apparatus according to any one of claims 25 to 28, wherein
the receiving module is further configured to receive, from the terminal device, identification information of the first cell and/or identification information of a second network device to which the first cell belongs.

30. The apparatus according to any one of claims 25 to 29, wherein when the first information comprises the connection failure report information, the processing module is further configured to determine, based on the connection failure report information, a cause of a connection failure of the terminal device, wherein the cause of the connection failure comprises any one of premature handover of the terminal device, delayed handover of the terminal device, or handover of the terminal device to an incorrect cell.

31. The apparatus according to any one of claims 25 to 29, wherein when the first information comprises the connection failure report information, the sending module is further configured to: send the connection failure report information to the second network device, wherein the second network device is a network device to which the first cell belongs; and
the receiving module is further configured to receive a cause of a connection failure from the second network device, wherein the cause of the connection failure is determined based on the connection failure report information.

32. The apparatus according to any one of claims 25 to 31, wherein
the first information further comprises a random access channel (RACH) report and/or movement history information that is of the terminal device.

33. A communication apparatus, wherein the communication apparatus is configured to perform the information processing method according to any one of claims 1 to 8, or is configured to perform the information processing method according to any one of claims 9 to 16.

34. A readable storage medium, wherein the readable storage medium stores a computer program, and when the computer program is executed, the computer program is configured to perform the information processing method according to any one of claims 1 to 8, or is configured to perform the information processing method according to any one of claims 9 to 16.
